(19) Europäisches Patentamt / European Patent Office / Office européen des brevets

(11) **EP 3 417 592 B1**

(12) **FASCICULE DE BREVET EUROPEEN**

(45) Date de publication et mention de la délivrance du brevet:
**12.05.2021 Bulletin 2021/19**

(21) Numéro de dépôt: **17709160.0**

(22) Date de dépôt: **17.02.2017**

(51) Int Cl.:
***H04L 29/06*** *(2006.01)*

(86) Numéro de dépôt international:
**PCT/FR2017/050362**

(87) Numéro de publication internationale:
**WO 2017/140993 (24.08.2017 Gazette 2017/34)**

(54) **SYSTÈME D'AUTHENTIFICATION D'UN UTILISATEUR AUPRÈS D'UN SERVEUR**

VERFAHREN ZUM AUTHENTIFIZIEREN EINES GEBRAUCHERS ZU EINEM SERVER

SYSTEM FOR AUTHENTICATING A USER TO A SERVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.02.2016 FR 1651392**

(43) Date de publication de la demande:
**26.12.2018 Bulletin 2018/52**

(73) Titulaire: **IDEMIA France**
**92400 Courbevoie (FR)**

(72) Inventeurs:
• **JOLETTE, Martin**
  **92700 Colombes (FR)**
• **COHEN-HADRIA, Igal**
  **92700 Colombes (FR)**

(74) Mandataire: **Cabinet Beau de Loménie**
**158, rue de l'Université**
**75340 Paris Cedex 07 (FR)**

(56) Documents cités:
**EP-A1- 2 343 666    US-A1- 2015 195 280**

**Description**

Arrière-plan de l'invention

L'invention se situe dans le domaine de l'authentification d'un terminal utilisateur auprès d'un serveur d'authentification Un example d'un tel système est divulgué dans US2015195280.

Dans l'état actuel de la technique, on connaît, par exemple pour sécuriser l'accès à un site bancaire, l'utilisation d'un petit boitier sécurisé (en anglais « token ») au format d'une petite calculatrice, permettant à un utilisateur d'obtenir un code d'authentification, par exemple sur saisie des derniers chiffres de son numéro de compte.

Cette solution présente l'inconvénient de reposer sur l'utilisation d'un tel boîtier dédié et du coût associé pour l'établissement bancaire.

Afin de supprimer ces coûts, une solution alternative a été proposée dans laquelle le boîtier sécurisé est remplacé par une application mobile s'exécutant sur un terminal mobile. Cette deuxième solution présente l'inconvénient d'être vulnérable aux attaques logicielles (par exemple par un malware).

L'invention vise à une solution d'authentification qui ne présente pas les inconvénients mentionnés ci-dessus.

Objet et résumé de l'invention

A cet effet, et selon un premier aspect, l'invention concerne un procédé, un serveur, un terminal et un système comme définis dans les revendications indépendantes 1, 10, 11 et 13, respectivement. Des modes de réalisation spécifiques sont définis dans les revendications dépendantes.

On rappelle en effet que depuis peu, on connaît des cartes à microcircuit, aussi connues sous le nom de cartes « motion code » (voir [REFMC]), de telles cartes étant notamment décrites dans le document US2014/0279555, dans lesquelles un code dynamique de sécurité (aussi connu sous le nom de « motion code ») est changé régulièrement, par exemple toutes les 45 mn environ et affiché sur un écran de la carte à microcircuit sans intervention de l'utilisateur.

Cette solution présente l'intérêt de ne pas nécessiter de boîtier dédié comme dans la première solution de l'art antérieure présentée en préambule et de ne pas être vulnérable aux attaques logicielles, notamment de type malware.

Les données temporelles utilisées par le terminal et le serveur d'authentification peuvent être des compteurs. Ces compteurs sont préférentiellement mis à jour plus souvent que le code dynamique de sécurité généré par la carte à microcircuit.

Dans un mode particulier de réalisation de l'invention, ledit code d'authentification constitue un mot de passe temporaire à durée de vie limitée.

Dans un mode particulier de réalisation de l'invention, les codes dynamiques de sécurité générés par le terminal et par le serveur sont des codes à 3 ou 4 chiffres.

Dans un mode particulier de réalisation de l'invention, le code d'authentification est un code dont la longueur est supérieure à celle dudit code dynamique de sécurité, par exemple un code à 6 chiffres.

Dans un mode particulier de réalisation, le terminal effectue l'étape d'envoi du code d'authentification au serveur.

En variante, cet envoi est réalisé par un autre équipement, par exemple un ordinateur personnel utilisé par l'utilisateur pour effectuer une transaction.

Cette variante renforce encore la sécurité du procédé d'authentification selon l'invention, puisqu'une attaque malveillante nécessite dans ce cas d'attaquer simultanément, le terminal utilisateur et ce deuxième équipement.

La sécurité peur encore être renforcée en prévoyant un mécanisme d'authentification au niveau du deuxième équipement, par exemple par mot de passe ou mesure de données biométiques.

Dans un mode particulier de réalisation, le procédé d'authentification mis en œuvre par le serveur d'authentification comporte une étape de génération ou de renouvellement dudit secret partagé à partir d'un identifiant dudit terminal utilisateur et d'envoi d'une information obtenue à partir de ce secret audit terminal.

Dans un mode particulier de réalisation du procédé d'authentification mis en œuvre par le serveur d'authentification, au moins une sous-étape de ladite étape d'obtention dudit code dynamique de sécurité ou de ladite étape d'obtention dudit code de vérification est mise en œuvre par une entité matérielle sécurisée.

Dans un mode particulier de réalisation, le procédé d'authentification mis en œuvre par le terminal comporte une étape préalable d'authentification de l'utilisateur du terminal auprès du terminal.

Dans un mode particulier de réalisation du procédé d'authentification mis en œuvre par le terminal, l'étape de génération du code d'authentification prend en compte des données d'entrée supplémentaires propres à une transaction.

Dans un mode particulier de réalisation du procédé d'authentification mis en œuvre par le terminal, le code d'authentification est généré par le terminal plus fréquemment que le code dynamique de sécurité n'est généré par la carte à microcircuit.

Corrélativement, l'invention concerne un serveur d'authentification pouvant être utilisé pour authentifier un terminal, ce serveur comportant :

- des moyens de réception d'une requête pour vérifier un code d'authentification ;
- des moyens d'obtention, par une fonction cryptographique secrète, d'un code dynamique de sécurité en utilisant un numéro de compte bancaire associé audit terminal et une donnée temporelle obtenue par le serveur ;
- des moyens cryptographiques d'obtention d'un code de vérification à partir dudit code dynamique de sécurité, d'une clef secrète partagée entre ledit terminal et ledit serveur et d'une donnée temporelle obtenue par ledit serveur ;
- des moyens de vérification de la validité dudit code d'authentification en le comparant avec ledit code de vérification.

L'invention vise aussi un terminal comportant :

- des moyens d'obtention d'un code dynamique de sécurité généré par une carte à microcircuit ;
- des moyens de génération d'un code d'authentification à partir dudit code dynamique de sécurité, d'un secret partagé avec le serveur d'authentification et d'une donnée temporelle obtenue par ledit terminal.

Dans un mode particulier de réalisation , le terminal comporte des moyens d'envoi dudit code d'authentification audit serveur pour authentifier ledit terminal auprès dudit serveur.

Le terminal est par exemple un terminal mobile, un téléphone mobile ou une tablette tactile.

Dans un mode particulier de réalisation de l'invention, les moyens du terminal pour obtenir le code dynamique de sécurité sont constitués par une zone de saisie dans laquelle l'utilisateur peut saisir ce code après l'avoir lu sur un écran de la carte à microcircuit.

L'invention vise également un système d'authentification d'un utilisateur comportant :

- une carte à microcircuit comportant des moyens de génération d'un code dynamique de sécurité; et
- un terminal tel que mentionné ci-dessus, ce terminal comportant des moyens d'obtention du code dynamique de sécurité généré par cette carte.

Dans un mode particulier de réalisation dy système selon l'invention, le code d'authentification est généré par le terminal plus fréquemment que le code dynamique de sécurité n'est généré par la carte à microcircuit.

Dans un mode particulier de réalisation de l'invention, la carte à microcircuit utilisée pour générer le code dynamique de sécurité prséente au moins une caractéristique suivante :

- la carte est conforme à la norme ISO7816 ;
- la carte est au format ID1 ;
- la carte est une carte de paiement ;
- la carte comporte en particulier une interface à contacts affleurant ;
- la carte comporte le nom du titulaire de la carte à microcircuit, un numéro de compte bancaire et une date d'expiration, le numéro de compte bancaire, la date d'expiration et le code dynamique de sécurité permettant de réaliser une transaction de paiement.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif et dans lesquels:

- la figure 1 représente une carte à microcircuit pouvant être utilise dans un mode de mise en œuvre de l'invention;
- la figure 2 représente, de façon schématique, un terminal et un serveur d'authentification conformes à un mode particulier de réalisation de l'invention, dans leur environnement ;
- la figure 3 représente un terminal conforme à un mode particulier de réalisation de l'invention ;
- la figure 4 représente sous forme d'organigramme les principales étapes d'un procédé d'authentification conforme à un mode particulier de réalisation de l'invention, mis en œuvre par le terminal de la figure 2 ;
- la figure 5 représente sous forme d'organigramme les principales étapes d'un procédé d'authentification conforme à un mode particulier de réalisation de l'invention, mis en œuvre par le serveur d'authentification de la figure 2 ; et
- la figure 6 représente des échanges de message entre les différents équipements de la figure 2 au cours d'un exemple de mise en œuvre de l'invention.

Description détaillée d'un premier mode de réalisation

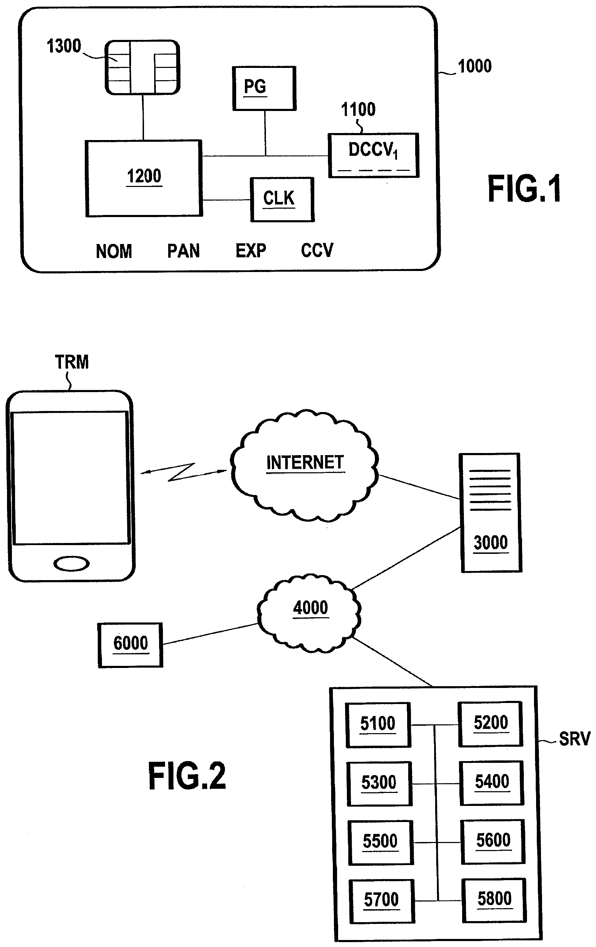

La **figure 1** représente une carte à microcircuit (en anglais smartcard) de paiement. Dans le mode de réalisation décrit ici, la carte à microcircuit 1000 est conforme à la norme ISO7816. Elle comporte en particulier une interface à contacts affleurant 1300.

De façon connue, le nom NOM du titulaire de la carte à microcircuit, un numéro de compte bancaire PAN (par exemple à 16 chiffres), une date d'expiration EXP sont imprimés sur la carte à microcircuit 1000. La carte comporte en outre un code statique de sécurité CW, celui-ci pouvant être ou ne pas être imprimé sur la carte. Pour plus de renseignements sur :

-    le code statique de sécurité CW, l'homme du métier peut consulter le document [REFCW] ;
-    le numéro de compte bancaire PAN, l'homme du métier peut consulter le document [REFPAN].

Cette carte à microcircuit 1000 comporte un contrôleur 1200 comportant un module apte à fournir la date courante, par exemple une horloge CLK, ce contrôleur 1200 étant apte à calculer un code dynamique de sécurité $DCCV_1$ en appliquant une fonction cryptographique secrète à des paramètres comportant le numéro de compte bancaire PAN et un paramètre temporel.

Dans le mode de réalisation décrit ici, le code dynamique de sécurité $DCCV_1$ est varié de façon périodique, selon une période prédéterminée.

Au contraire, le code statique de sécurité CW est constant dans le temps.

La carte à microcircuit 1000 comporte un écran 1100 d'affichage de ce code dynamique de sécurité $DCCV_1$. Cet écran peut comporter par exemple 3 ou 4 zones élémentaires selon la taille de ce code dynamique.

Dans le mode de réalisation décrit ici, la carte à microcircuit 1000 comporte en outre une batterie non représentée permettant d'alimenter l'écran d'affichage 1100, notamment lorsque le code dynamique de sécurité $DCCV_1$ est modifié.

Afin de limiter la consommation de cette batterie, il peut être souhaitable de ne pas modifier le code dynamique de sécurité $DCCV_1$ trop souvent.

La **figure 2** représente un terminal TRM et un serveur d'authentification SRV conformes à un mode particulier de réalisation de l'invention, un serveur d'application 3000, le système bancaire 6000 de l'entité émettrice de la carte à microcircuit 1000, et un serveur d'authentification SRV conforme à l'invention.

Dans le mode de réalisation décrit ici, le terminal TRM accède au serveur d'application 3000 par le réseau Internet ; le serveur d'application 3000, le système bancaire 6000 et le serveur SRV d'authentification communiquent via un réseau interbancaire 4000.

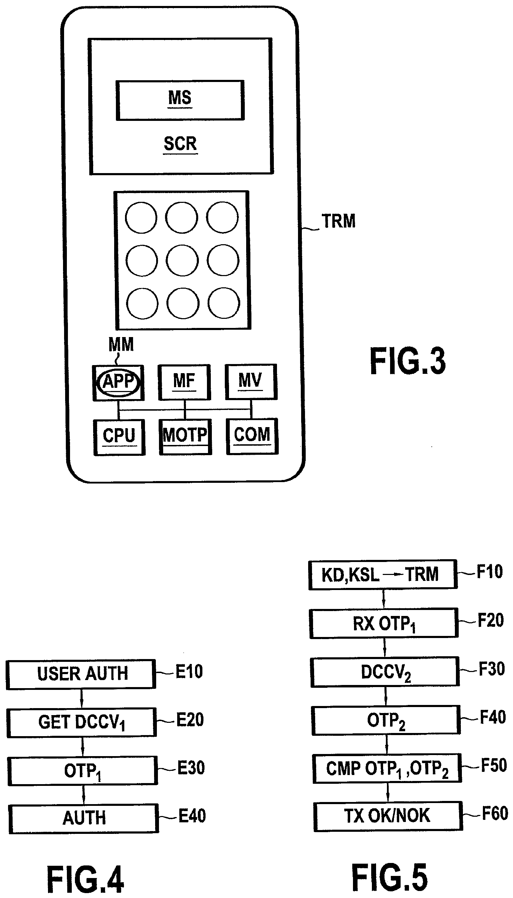

En référence à la **figure 3,** le terminal utilisateur TRM est dans cet exemple constitué par un téléphone mobile. Il comporte notamment un écran tactile SCR, un clavier KB, un processeur CPU, une mémoire morte MM, une mémoire non volatile réinscriptible MF et une mémoire vive MV, un module de communication COM, ces éléments étant reliés entre eux par un système de bus non représenté.

Le terminal utilisateur comporte des moyens MS de saisie permettant à un utilisateur de saisir un code dynamique de sécurité $DCCV_1$ calculé par la carte à microcircuit 1000. Ces moyens de saisie MS peuvent être constitués par une fenêtre de saisie à 3 ou 4 zones élémentaires, en fonction de la taille du code $DCCV_1$.

Le module de communication 1000 est apte à envoyer ce code dynamique de sécurité $DCCV_1$ au serveur d'authentification SRV.

•    Le terminal utilisateur comporte également un module cryptographique MOTP apte à générer un code d'authentification $OTP_1$, à partir du code dynamique de sécurité $DCCV_1$ saisi par l'utilisateur et d'un secret KD partagé avec le serveur d'authentification SRV. Le secret partagé KD est dans cet exemple mémorisé dans la mémoire MF. Le module de communication COM est apte à envoyer le code d'authentification OTP1 au serveur d'authentification SRV.

Dans le mode de réalisation de l'invention décrit ici, le code d'authentification OTP1 est renouvelé plus fréquemment que le code dynamique de sécurité $DCCV_1$ par la carte à microcircuit.

La mémoire morte MM comporte un programme d'ordinateur (ou application) APP conforme à l'invention. Cette application APP comporte des instructions, qui lorsqu'elles sont exécutées par le processeur CPU, permettent de mettre en œuvre les étapes E20 à E40 du procédé d'authentification conforme à l'invention et dont les principales étapes seront décrites en référence à la figure 4.

L'architecture du serveur d'authentification SRV est représentée à la figure 1. Il comporte notamment :

-    un module 5100 apte à obtenir à obtenir une donnée temporelle, soit en utilisant des moyens internes, soit par exemple à partir d'un autre équipement ou d'un autre réseau, par des moyens de communications sans fil ou filaires ;
-    un module 5200 de communication apte notamment à recevoir simultanément ou séparément un premier code dynamique de sécurité $DCCV_1$ et un code d'authentification $OTP_1$ envoyés par le terminal utilisateur TRM ;
-    un module 5300 de génération d'un deuxième code dynamique de sécurité $DCCV_2$ en utilisant un numéro de compte bancaire PAN, une fonction cryptographique secrète et une donnée temporelle obtenue par le module 5100 ; et
- un module 5400 de vérification de la validité d'un premier code dynamique de sécurité $DCCV_1$ généré par une carte bancaire 1000 en le comparant avec le deuxième code dynamique de sécurité $DCCV_2$.

On notera que dans un mode de réalisation, le serveur d'authentification coopère avec une entité matérielle sécurisée HSM pour générer le deuxième code dynamique de sécurité $DCCV_2$ et/ou vérifier la validité du premier code dynamique de sécurité $DCCV_1$ par comparaison avec le deuxième code dynamique de sécurité $DCCV_2$ comme mentionné ci-dessus.

Pour plus de renseignements sur une telle entité matérielle sécurisée HSM, l'homme du métier peut se reporter au document [REFHSM].

Le serveur d'authentification SRV comporte également :

- des moyens 5500 d'obtention et de renouvellement, à partir d'un identifiant du terminal utilisateur TRM, d'un secret KD pouvant être partagé avec le terminal TRM ;
- un module 5600 d'obtention, à partir du secret partagé KD et du deuxième code dynamique de sécurité $DCCV_2$, d'un secret à durée de vie limitée KSL. Ce module 5600 utilise à cet effet une fonction de code d'authentification de message HMAC :

$$KSL = HMAC(KD, DCCV_2).$$

Pour plus de renseignements sur les fonctions de code d'authentification de message, l'homme du métier peut se reporter à la référence [REFHMAC].

Le serveur SRV est apte à envoyer le secret partagé KD et/ou le secret à durée de vie limitée KSL au terminal utilisateur TRM en utilisant son module de communication 5200.

Le serveur d'authentification SRV comporte également :

- un module cryptographique 5700 de génération d'un code de vérification $OTP_2$ à partir du code dynamique de sécurité $DCCV_2$ obtenu par ce serveur et du secret partagé KD, éventuellement en coopération avec l'entité HSM ; et
- un module 5800 de vérification de la validité du code d'authentification $OTP_1$ en le comparant avec le code de vérification $OTP_2$.

On notera là encore, que dans un mode de réalisation, le serveur d'authentification coopère avec l'entité HSM pour générer le code de vérification $OTP_2$ et/ou vérifier la validité du code d'authentification $OTP_1$ par comparaison avec le deuxième code de vérification $OTP_2$ comme mentionné ci-dessus.

Le serveur d'authentification SRV est apte à envoyer un message au serveur d'application 3000 ou système bancaire 6000 pour autoriser une transaction lorsque la validité du code d'authentification $OTP_1$ a été vérifiée.

Exemple de procédé d'authentification mis en œuvre par le terminal utilisateur

La **figure 4** représente les principales étapes d'un procédé d'authentification d'un utilisateur auprès d'un serveur d'authentification SRV conforme à l'invention, ce procédé étant mis en œuvre par le terminal utilisateur TRM.

Au cours d'une étape E10, l'utilisateur s'authentifie sur son terminal utilisateur TRM. Cette étape E10 d'authentification peut être réalisée en saisissant un code personnel d'identification (en anglais « PIN CODE »), constitué par exemple de 4 chiffres, en utilisant le clavier numérique KB du terminal TRM. Dans une variante, cette étape E10 d'authentification peut être réalisée par l'utilisateur en dessinant, sur l'écran tactile SCR du terminal TRM, un motif préalablement mémorisé dans la mémoire non volatile réinscriptible MF du terminal TRM. Dans une autre variante, cette étape E10 d'authentification peut par exemple être réalisée par des moyens biométriques aptes à identifier une caractéristique physique de l'utilisateur, par exemple une empreinte digitale, un iris, ...

En cas de succès de l'étape E10 d'authentification de l'utilisateur, l'application APP du terminal TRM invite l'utilisateur, au cours d'une étape E20 à saisir, dans la zone de saisie MS, un code dynamique de sécurité $DCCV_1$ affiché sur l'écran 1100 de la carte à microcircuit 1000.

Conformément, à l'invention, au cours d'une étape E30, l'application APP génère un code d'authentification $OTP_1$ à partir du premier code dynamique de sécurité $DCCV_1$ saisi à l'étape E20 et du secret KD partagé avec le serveur d'authentification SRV. Une façon dont ce secret partagé KD peut être renouvelé et transmis au terminal utilisateur TRM par le serveur d'authentification SRV sera décrite ultérieurement.

Le code d'authentification $OTP_1$ est utilisé par l'utilisateur pour s'authentifier auprès du serveur SRV au cours d'une étape E40.

Selon le scénario de mise en œuvre de l'invention, et comme décrit ultérieurement, le code d'authentification OTP$_1$ peut être généré à l'étape E30 sans donnée d'entrée ou avec données d'entrée saisies par exemple au moyen du clavier KB du terminal TRM.

Dans un mode particulier de réalisation, le code d'authentification OTP$_1$ est un cryptogramme à 6 chiffres.

Dans le mode de réalisation décrit ici, ce code d'authentification OTP$_1$ est calculé partir d'un secret à durée de vie limitée KSL et d'une donnée temporelle TC obtenue par le terminal utilisateur TRM. Ce secret à durée de vie limitée KSL peut être reçu directement du serveur SRV ou recalculé par le terminal TRM à partir du secret partagé KD reçu de ce serveur.

Par exemple, dans le mode de réalisation décrit ici, le secret à durée de vie limitée KSL est obtenu par le terminal utilisateur en appliquant une fonction de code d'authentification de message HMAC prenant en entrée le secret KD partagé avec le serveur d'authentification SRV et le premier code dynamique de sécurité DCCV$_1$ saisi par l'utilisateur :

$$KSL = HMAC(KD, DCCV_1).$$

Par exemple, OTP$_1$ = HOTP (KSL, TC), avec :

- HOTP(K, C) = Truncate(HMAC(K,C)) & 7FFFFFFF16

La durée temporelle TC peut par exemple être un compteur calculé à partir de l'instant courant et d'une période de temps. Par exemple :

$$TC= (unixtime(now) - unixtime(T0)) / TS,$$

où T0 et TS sont des paramètres temporels spécifiques connus de l'application APP et du serveur d'authentification SRV.

Exemple de procédé d'authentification mis en œuvre par le serveur d'authentification SRV

La **figure 5** représente les principales étapes d'un procédé d'authentification de l'utilisateur d'un terminal TRM, ce procédé étant mis en œuvre par un serveur d'authentification SRV conforme à l'invention.

On supposera qu'au cours d'une étape F10, le serveur d'authentification SRV a généré ou renouvelé, à partir d'un identifiant du terminal utilisateur TRM un secret KD et envoyé ce secret KD au terminal TRM. En ce sens le secret KD est partagé entre le serveur SRV et le terminal TRM.

Comme mentionné précédemment, le serveur SRV peut également ou de façon alternative envoyer au terminal utilisateur TRM un secret à durée de vie limitée KSL, le terminal TRM étant apte à recalculer le secret à durée de vie limitée KSL à partir du secret partagé KD et du premier code dynamique de sécurité DCCV$_1$.

Au cours d'une étape F20, le serveur d'authentification SRV reçoit, du serveur d'application 3000, une requête pour vérifier un code d'authentification OTP$_1$ envoyé à ce serveur 3000 par un terminal utilisateur TRM.

Au cours d'une étape F30, le serveur d'authentification génère, ou demande la génération, par exemple à une entité HSM, d'un code dynamique de sécurité DCCV$_2$ (deuxième code au sens de l'invention) en utilisant un numéro de compte bancaire PAN associé au terminal utilisateur TRM, une fonction cryptographique secrète et une donnée temporelle CTC obtenue par ce serveur.

Puis au cours d'une étape F40, le serveur d'authentification génère, ou demande la génération, par exemple à une entité HSM, d'un code de vérification OTP2, à partir du deuxième code dynamique de sécurité DCCV$_2$, de la clef secrète KD partagée avec le terminal TRM et d'une donnée temporelle ATC obtenue par le serveur. Par exemple :

$$KSL_2 = HMAC(KD, DCCV_2).$$

Par exemple, OTP$_2$ = HOTP (KSL$_2$, ATC),

Le serveur SRV vérifie la validité du code d'authentification OTP$_1$ en le comparant avec le code de vérification OTP2 au cours d'une étape F50.

Dans le mode de réalisation, il renvoie le résultat de ce cette vérification (OK, NOK) au serveur d'application 3000 au cours d'une étape F60.

### Description d'un premier scénario de mise en œuvre de l'invention

Dans un premier scénario, on suppose que l'utilisateur souhaite utiliser un ordinateur personnel pour s'authentifier auprès d'un serveur bancaire SRV, par exemple pour consulter l'état de son compte en banque ou imprimer un relevé d'identité bancaire.

Dans ce scénario, l'utilisateur demande la génération d'un code d'authentification $OTP_1$ comme décrit précédemment en référence aux étapes E10 à E30, et le code d'authentification $OTP_1$ s'affiche sur l'écran SCR du terminal comme représenté à la figure 4C.

Ce code d'authentification $OTP_1$ constitue un mot de passe temporaire (en anglais « one time password ») dont la durée de vie limitée TTL restante avant expiration de ce code s'affiche sur l'écran du terminal TRM.

Ce code d'authentification $OTP_1$ est alors saisi par l'utilisateur sur son ordinateur personnel pour s'authentifier auprès du serveur bancaire SRV.

### Description d'un deuxième scénario de mise en œuvre de l'invention

Dans ce deuxième scénario, on suppose que l'utilisateur souhaite utiliser un ordinateur personnel pour effectuer un achat en ligne s'authentifier auprès d'un site marchand.

Dans ce scénario, au moment de payer, le serveur SRV de paiement du site marchand envoie une requête d'authentification à l'application APP, cette requête comportant avec le montant et des informations sur la transaction, par exemple les détails d'un titre de transport, ou d'un ticket de réservation de spectacle.

L'application APP invite ensuite l'utilisateur, comme décrit précédemment en référence à l'étape E20, à saisir le code dynamique de sécurité $DCCV_1$ affiché sur l'écran 1100 de la carte à microcircuit 1000.

Dans ce scénario d'utilisation, l'application APP génère, au cours de l'étape E30, le code d'authentification $OTP_1$ avec des données d'entrée constituées par exemple par le montant et/ou par au moins une partie des informations sur la transaction. Le code d'authentification $OTP_1$ peut s'afficher sur l'écran SCR du terminal TRM.

Ce code d'authentification $OTP_1$ est alors saisi par l'utilisateur sur son ordinateur personnel pour s'authentifier auprès du serveur de paiement SRV du site marchand.

Ce deuxième scénario de mise en œuvre de l'invention peut également et notamment être utilisé pour permettre à un utilisateur de s'authentifier auprès d'un serveur bancaire SRV afin d'effectuer un virement vers un compte bénéficiaire dont le numéro est saisi par l'utilisateur au moyen du clavier KB du terminal TRM. Une partie de ce numéro de compte peut constituer une donnée d'entrée pour générer le code d'authentification $OTP_1$ à l'étape E30.

### Description d'un troisième scénario de mise en œuvre de l'invention

Dans le deuxième scénario décrit ci-dessus, le code d'authentification $OTP_1$ calculé à l'étape E30 est saisi par l'utilisateur sur son ordinateur personnel pour s'authentifier auprès d'un serveur SRV (serveur de paiement du site marchand ou serveur bancaire).

Dans un troisième scénario de mise en œuvre de l'invention, le code d'authentification $OTP_1$ calculé par le terminal TRM à l'étape E30 est directement envoyé au serveur SRV par le terminal utilisateur TRM.

On notera que dans ce mode de réalisation, il n'est pas nécessaire que le code d'authentification $OTP_1$ s'affiche sur l'écran SCR du terminal TRM.

### Description détaillée d'un autre mode de réalisation de l'invention

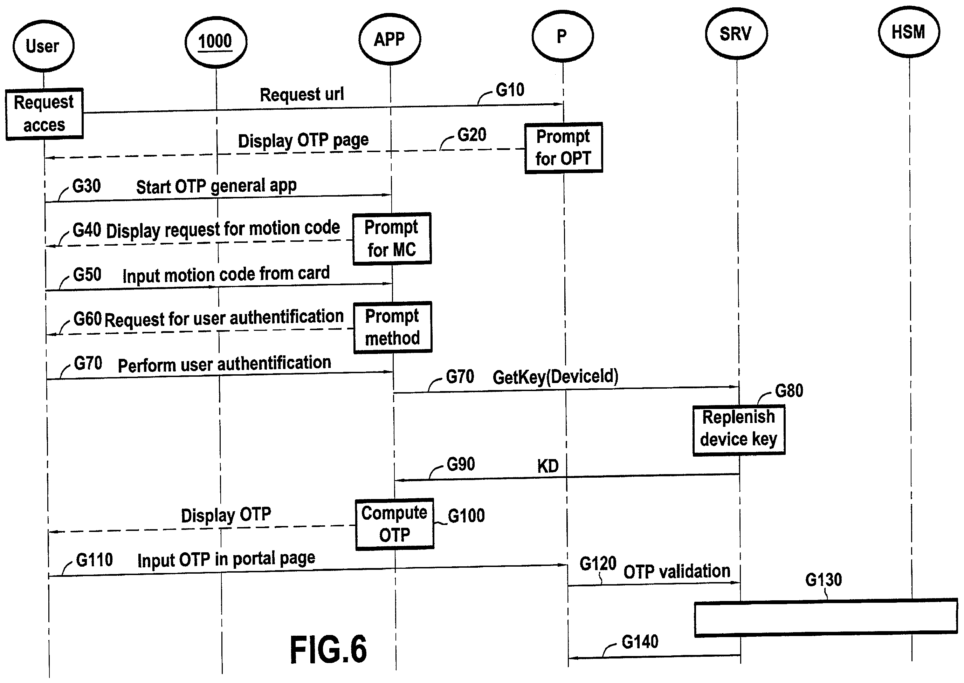

La **figure 6** représente un mode de réalisation de l'invention dans lequel on met régulièrement à jour le deuxième secret dans le téléphone.

Au cours d'une première étape G10, l'utilisateur se connecte avec son ordinateur personnel auprès d'un portail P, en saisissant l'URL de ce portail dans un navigateur Internet installé sur cet ordinateur.

Au cours d'une étape G20, le portail P envoie à l'ordinateur personnel une page Web permettant à l'utilisateur de saisir un code d'authentification $OTP_1$.

Au cours d'une étape G30, l'utilisateur lance l'application APP sur son terminal utilisateur TRM.

Au cours d'une étape G40, l'application APP demande à l'utilisateur de saisir un code dynamique de sécurité $DCCV_1$ dans une zone de saisie affichée sur l'écran SCR de ce terminal TRM.

Au cours d'une étape G50, l'utilisateur lit le code dynamique $DCCV_1$ affiché sur l'écran DISP de la carte à microcircuit 1000 et saisit ce code dynamique $DCCV_1$ dans cette zone de saisie.

Au cours d'une étape G60, l'application APP demande à l'utilisateur de s'authentifier sur le terminal TRM, par exemple en saisissant un code personnel, en dessinant un motif sur l'écran SCR ou par lecture de données biométriques.

Si le terminal TRM authentifie effectivement l'utilisateur (étape G70), l'application APP interroge au cours d'une étape G70, le serveur d'authentification SRV pour obtenir le secret partagé KD.

Dans le mode de réalisation décrit ici, ce secret KD est renouvelé au cours d'une étape G80 et renvoyé au terminal TRM au cours d'une étape G90.

Le terminal TRM génère le code d'authentification $OTP_1$ au cours d'une étape G100 en utilisant le code dynamique de sécurité $DCCV_1$ saisi à l'étape G50 et le secret partagé KD reçu à l'étape G90.

Au cours d'une étape G110, l'utilisateur saisit le code d'authentification $OTP_1$ dans la page Web reçue du portail P à l'étape F20.

Au cours d'une étape G120, le portail P transmet le code d'authentification $OTP_1$ au serveur d'authentification SRV pour demander sa vérification.

A cet effet, au cours d'une étape G130, le serveur d'authentification calcule, seul, ou en combinaison avec une entité HSM :

- un code dynamique de sécurité DCCV2 en utilisant un numéro de compte bancaire PAN associé au terminal utilisateur TRM, une fonction cryptographique secrète et une donnée temporelle obtenue par ce serveur ;
- un code de vérification OTP2, à partir du code dynamique de sécurité DCCV2, de la clef secrète KD partagée avec le terminal TRM et d'une donnée temporelle TC obtenue par le serveur.

Le serveur SRV vérifie la validité du code d'authentification $OTP_1$ en le comparant avec le code de vérification $OTP_2$.

Dans le mode de réalisation, le serveur renvoie le résultat de ce cette vérification (OK, NOK) au serveur d'application SRV au cours d'une étape G140.

Références :

[REFMC] : http://www.oberthur.com/fr/le-groupe-bpce-lance-avec-oberthur-technologies-une-innovation-mondiale-la-premiere-carte-bancaire-a-cryptogramme-dynamique/
[REFCW] : en.wikipedia.org/wiki/card_security_code
[REFPAN] : en.wikipedia.org/wiki/Bank_card_number
[REFHSM] : HSM : https://fr.wikipedia.org/wiki/Hardware_Security_Module
[REFHMAC] :https://fr.wikipedia.org/wiki/Keyed-Hash_Message_Authentication_Code

**Revendications**

1. Procédé d'authentification mis en œuvre par un serveur d'authentification pour authentifier un terminal (TRM), ce procédé comportant :

   - une étape de génération ou de renouvellement d'un secret partagé (KD) à partir d'un identifiant dudit terminal utilisateur (TRM) et d'envoi (F10) d'une information (KD, KSL) obtenue à partir de ce secret audit terminal (TRM) ;
   - une étape (F20) de réception d'une requête pour vérifier un code d'authentification ($OTP_1$) ;
   - une étape (F30) d'obtention, par une fonction cryptographique secrète, d'un code dynamique de sécurité ($DCCV_2$) en utilisant un numéro de compte bancaire associé audit terminal (TRM), et une donnée temporelle (CTC) obtenue par ledit serveur (SRV) ;
   - une étape (F40) d'obtention d'un code de vérification (OTP2) à partir dudit code dynamique de sécurité ($DCCV_2$), du secret (KD) partagé entre ledit terminal (TRM) et ledit serveur (SRV) et d'une donnée temporelle (ATC) obtenue par ledit serveur ;
   - une étape (F50) de vérification de la validité dudit code d'authentification ($OTP_1$) en le comparant avec ledit code de vérification (OTP2).

2. Procédé d'authentification selon la revendication 1, **caractérisé en ce que** au moins une sous-étape de ladite étape (F30) d'obtention dudit code dynamique de sécurité ($DCCV_2$) ou de ladite étape (F40) d'obtention dudit code de vérification (OTP2) est mise en œuvre par une entité matérielle sécurisée (HSM).

3. Procédé d'authentification d'un terminal (TRM) auprès d'un serveur d'authentification (SRV), ledit procédé comportant :

- une étape de réception d'une information obtenue à partir d'un secret à partager avec ledit serveur d'authentification ;
- une étape (E20), mise en œuvre par ledit terminal, d'obtention un code dynamique de sécurité (DCCV$_1$) généré par une carte à microcircuit (1000) ;
- une étape (E30), mise en œuvre par ledit terminal ; de génération d'un code d'authentification (OTP$_1$) à partir dudit code dynamique de sécurité (DCCV$_1$), du secret (KD) partagé avec ledit serveur d'authentification (SRV) et d'une donnée temporelle (TC) obtenue par ledit terminal ; et
- une étape (E40) d'envoi dudit code d'authentification (OTP$_1$) audit serveur (SRV) pour authentifier ledit terminal (TRM) auprès dudit serveur (SRV).

**4.** Procédé d'authentification selon la revendication 3, caractérisé en ladite étape (E40) d'envoi un effectué par un autre équipement.

**5.** Procédé d'authentification selon la revendication 3 ou 4, **caractérisé en ce qu'**il comporte une étape préalable (E10) d'authentification de l'utilisateur du terminal auprès dudit terminal (TRM).

**6.** Procédé d'authentification selon l'une quelconque des revendications 3 à 5, **caractérisé en ce que** ladite étape (E30) de génération dudit code d'authentification (OTP$_1$) prend en compte des données d'entrée supplémentaires propres à une transaction.

**7.** Procédé d'authentification selon l'une quelconque des revendications 3 à 6, **caractérisé en ce que** ledit code d'authentification (OTP$_1$) constitue un mot de passe temporaire à durée de vie limitée.

**8.** Procédé d'authentification selon l'une quelconque des revendications 1 à 7 **caractérisé en ce que** ledit code d'authentification (OTP$_1$) est un code dont la longueur est supérieure à celle dudit code dynamique de sécurité (DCCV$_1$, DCCV$_2$), par exemple un code à 6 chiffres.

**9.** Procédé d'authentification selon l'une quelconque des revendications 1 à 8 **caractérisé en ce que** ledit code dynamique de sécurité (DCCV$_1$, DCCV$_2$) est un code à 3 ou 4 chiffres.

**10.** Serveur d'authentification pouvant être utilisé pour authentifier un terminal (TRM), ce serveur comportant :

- des moyens (5200) de réception d'une requête pour vérifier un code d'authentification (OTP$_1$) ;
- des moyens (5300) d'obtention, par une fonction cryptographique secrète, d'un code dynamique de sécurité (DCCV$_2$) en utilisant un numéro de compte bancaire associé audit terminal (TRM) et une donnée temporelle (CTC) obtenue par ledit serveur (SRV) ;
- des moyens cryptographiques (5700) d'obtention d'un code de vérification (OTP2) à partir dudit code dynamique de sécurité (DCCV$_2$), d'un secret (KD) partagé entre ledit terminal (TRM) et ledit serveur (SRV) et d'une donnée temporelle (ATC) obtenue par ledit serveur ;
- des moyens (5800) de vérification de la validité dudit code d'authentification (OTP$_1$) en le comparant avec ledit code de vérification (OTP2) ;

le serveur étant en outre configuré pour générer ou renouveler ledit secret partagé (KD) à partir d'un identifiant dudit terminal utilisateur (TRM) et pour envoyer (F10) une information (KD, KSL) obtenue à partir de ce secret audit terminal (TRM) .

**11.** Terminal (TRM) comportant :

- des moyens (MS) d'obtention d'un code dynamique de sécurité (DCCV$_1$) généré par une carte à microcircuit (1000) ;
- des moyens (MOTP) de génération d'un code d'authentification (OTP$_1$) à partir dudit code dynamique de sécurité (DCCV$_1$), d'un secret (KD) partagé avec ledit serveur d'authentification (SRV) et d'une donnée temporelle (TC) obtenue par ledit terminal,

le terminal étant en outre configuré pour recevoir une information obtenue à partir d'un secret à partager avec ledit serveur d'authentification.

**12.** Terminal selon la revendication 11 **caractérisé en ce qu'**il comporte des moyens (COM) d'envoi dudit code d'authen-

tification (OTP$_1$) audit serveur (SRV) pour authentifier ledit terminal (TRM) auprès dudit serveur (SRV).

13. Système d'authentification d'un utilisateur comportant :

- une carte à microcircuit (1000) comportant des moyens de génération d'un code dynamique de sécurité (DCCV$_1$) ; et
- un terminal selon la revendication 11 ou 12, ce terminal comportant des moyens d'obtention dudit code dynamique de sécurité (DCCV$_1$).

14. Système d'authentification selon la revendication 13, **caractérisé en ce que** le code d'authentification (OTP$_1$) est généré (E30) par le terminal (TRM) plus fréquemment que le code dynamique de sécurité (DCCV$_1$) n'est généré par ladite carte à microcircuit.

**Patentansprüche**

1. Authentifizierungsverfahren, das von einem Authentifizierungsserver ausgeführt wird, zum Authentifizieren eines Endgeräts (TRM), wobei dieses Verfahren umfasst:

- einen Schritt des Erzeugens oder des Erneuerns eines geteilten Geheimnisses (KD) ausgehend von einer Kennung des Benutzerendgeräts (TRM) und des Sendens (F10) einer Information (KD, KSL), die ausgehend von diesem Geheimnis erhalten wird, an das Endgerät (TRM),
- einen Schritt (F20) des Empfangens einer Aufforderung zum Überprüfen eines Authentifizierungscodes (OTP$_1$),
- einen Schritt (F30) des Erhaltens eines dynamischen Sicherheitscodes (DCCV$_2$) unter Verwendung einer Bankkontonummer, die dem Endgerät (TRM) zugehörig ist, und eines durch den Server (SRV) erhaltenen Zeitdatenelements (CTC) durch eine geheime kryptographische Funktion,
- einen Schritt (F40) des Erhaltens eines Überprüfungscodes (OTP2) ausgehend von dem dynamischen Sicherheitscode (DCCV$_2$), von dem von dem Endgerät (TRM) und dem Server (SRV) geteilten Geheimnis (KD) und von einem durch den Server erhaltenen Zeitdatenelement (ATC),
- einen Schritt (F50) des Überprüfens der Gültigkeit des Authentifizierungscodes (OTP$_1$), indem er mit dem Überprüfungscode (OTP2) verglichen wird.

2. Authentifizierungsverfahren nach Anspruch 1, **dadurch gekennzeichnet, dass** mindestens ein Teilschritt des Schritts (F30) des Erhaltens des dynamischen Sicherheitscodes (DCCV$_2$) oder des Schritts (F40) des Erhaltens des Überprüfungscodes (OTP2) von einer gesicherten Hardware-Einheit (HSM) ausgeführt wird.

3. Verfahren zur Authentifizierung eines Endgeräts (TRM) bei einem Authentifizierungsserver (SRV), wobei das Verfahren umfasst:

- einen Schritt des Empfangens einer Information, die ausgehend von einem mit dem Authentifizierungsserver zu teilenden Geheimnis erhalten wird,
- einen von dem Endgerät ausgeführten Schritt (E20) des Erhaltens eines von einer Chipkarte (1000) erzeugten dynamischen Sicherheitscodes (DCCV$_1$),
- einen von dem Endgerät ausgeführten Schritt (E30) des Erzeugens eines Authentifizierungscodes (OTP$_1$) ausgehend von dem dynamischen Sicherheitscode (DCCV$_1$), von dem mit dem Authentifizierungsserver (SRV) geteilten Geheimnis (KD) und von einem durch das Endgerät erhaltenen Zeitdatenelement (TC), und
- einen Schritt (E40) des Sendens des Authentifizierungscodes (OTP$_1$) an den Server (SRV), um das Endgerät (TRM) bei dem Server (SRV) zu authentifizieren.

4. Authentifizierungsverfahren nach Anspruch 3, **dadurch gekennzeichnet, dass** der Schritt (E40) des Sendens von einer anderen Ausrüstung vorgenommen wird.

5. Authentifizierungsverfahren nach Anspruch 3 oder 4, **dadurch gekennzeichnet, dass** es einen vorangehenden Schritt (E10) des Authentifizierens des Benutzers des Endgeräts bei dem Endgerät (TRM) umfasst.

6. Authentifizierungsverfahren nach einem der Ansprüche 3 bis 5, **dadurch gekennzeichnet, dass** der Schritt (E30) des Erzeugens des Authentifizierungscodes (OTP$_1$) zusätzliche Eingabedaten berücksichtigt, die einer Transaktion eigen sind.

7. Authentifizierungsverfahren nach einem der Ansprüche 3 bis 6, **dadurch gekennzeichnet, dass** der Authentifizierungscode ($OTP_1$) ein temporäres Passwort mit begrenzter Lebensdauer bildet.

8. Authentifizierungsverfahren nach einem der Ansprüche 1 bis 7, **dadurch gekennzeichnet, dass** der Authentifizierungscode ($OTP_1$) ein Code ist, dessen Länge größer als diejenige des dynamischen Sicherheitscodes ($DCCV_1$, $DCCV_2$) ist, zum Beispiel ein Code mit 6 Ziffern.

9. Authentifizierungsverfahren nach einem der Ansprüche 1 bis 8, **dadurch gekennzeichnet, dass** der dynamische Sicherheitscode ($DCCV_1$, $DCCV_2$) ein Code mit 3 oder 4 Ziffern ist.

10. Authentifizierungsserver, der zum Authentifizieren eines Endgeräts (TRM) verwendet werden kann, wobei dieser Server umfasst:

    - Mittel (5200) zum Empfang einer Aufforderung zum Überprüfen eines Authentifizierungscodes ($OTP_1$),
    - Mittel (5300) zum Erhalt eines dynamischen Sicherheitscodes ($DCCV_2$) unter Verwendung einer Bankkontonummer, die dem Endgerät (TRM) zugehörig ist, und eines durch den Server (SRV) erhaltenen Zeitdatenelements (CTC) durch eine geheime kryptographische Funktion,
    - kryptographische Mittel (5700) zum Erhalt eines Überprüfungscodes (OTP2) ausgehend von dem dynamischen Sicherheitscode ($DCCV_2$), von einem von dem Endgerät (TRM) und dem Server (SRV) geteilten Geheimnis (KD) und von einem durch den Server erhaltenen Zeitdatenelement (ATC),
    - Mittel (5800) zur Überprüfung der Gültigkeit des Authentifizierungscodes ($OTP_1$), indem er mit dem Überprüfungscode (OTP2) verglichen wird,

    wobei der Server ferner dazu ausgestaltet ist, das geteilte Geheimnis (KD) ausgehend von einer Kennung des Benutzerendgeräts (TRM) zu erzeugen oder zu erneuern und eine Information (KD, KSL), die ausgehend von diesem Geheimnis erhalten wird, an das Endgerät (TRM) zu senden (F10).

11. Endgerät (TRM), umfassend:

    - Mittel (MS) zum Erhalt eines dynamischen Sicherheitscodes ($DCCV_1$), der durch eine Chipkarte (1000) erzeugt wird,
    - Mittel (MOTP) zur Erzeugung eines Authentifizierungscodes ($OTP_1$) ausgehend von dem dynamischen Sicherheitscode ($DCCV_1$), von einem mit dem Authentifizierungsserver (SRV) geteilten Geheimnis (KD) und von einem durch das Endgerät erhaltenen Zeitdatenelement (TC),

    wobei das Endgerät ferner dazu ausgestaltet ist, eine Information zu empfangen, die ausgehend von einem mit dem Authentifizierungsserver zu teilenden Geheimnis erhalten wird.

12. Endgerät nach Anspruch 11, **dadurch gekennzeichnet, dass** es Mittel (COM) zur Sendung des Authentifizierungscodes ($OTP_1$) an den Server (SRV) zum Authentifizieren des Endgeräts (TRM) bei dem Server (SRV) umfasst.

13. System zur Authentifizierung eines Benutzers, umfassend:

    - eine Chipkarte (1000), die Mittel zur Erzeugung eines dynamischen Sicherheitscodes ($DCCV_1$) umfasst, und
    - ein Endgerät nach Anspruch 11 oder 12, wobei dieses Endgerät Mittel zum Erhalt des dynamischen Sicherheitscodes ($DCCV_1$) umfasst.

14. Authentifizierungssystem nach Anspruch 13, **dadurch gekennzeichnet, dass** der Authentifizierungscode ($OTP_1$) durch das Endgerät (TRM) häufiger erzeugt (E30) wird als der dynamische Sicherheitscode ($DCCV_1$) durch die Chipkarte erzeugt wird.

**Claims**

1. An authentication method implemented by an authentication server to authenticate a terminal (TRM), this method including:

    - a step of generating or renewing a shared secret (KD) from an identifier of said user terminal (TRM) and sending (F10) information (KD, KSL) obtained from this secret to said terminal (TRM);
- a step (F20) of receiving a request to verify an authentication code ($OTP_1$);
- a step (F30) of obtaining, through a secret cryptographic function, a dynamic security code ($DCCV_2$) by using a bank account number associated with said terminal (TRM), and a time data (CTC) obtained by said server (SRV);
- a step (F40) of obtaining a verification code (OTP2) from said dynamic security code ($DCCV_2$), from the secret (KD) shared between said terminal (TRM) and said server (SRV) and from a time data (ATC) obtained by said server;
- a step (F50) of verifying the validity of said authentication code ($OTP_1$) by comparing it with said verification code ($OTP_2$).

2. The authentication method according to claim 1, **characterized in that** at least one sub-step of said step (F30) of obtaining said dynamic security code ($DCCV_2$) or of said step (F40) of obtaining said verification code ($OTP_2$) is implemented by a secure hardware entity (HSM).

3. A method for authenticating a terminal (TRM) with an authentication server (SRV), said method including:

- a step of receiving information obtained from a secret to be shared with said authentication server;
- a step (E20), implemented by said terminal, of obtaining a dynamic security code ($DCCV_1$) generated by a smartcard (1000);
- a step (E30), implemented by said terminal; of generating an authentication code ($OTP_1$) from said dynamic security code ($DCCV_1$), from the secret (KD) shared with said authentication server (SRV) and from a time data (TC) obtained by said terminal; and
- a step (E40) of sending said authentication code ($OTP_1$) to said server (SRV) to authenticate said terminal (TRM) with said server (SRV).

4. The authentication method according to claim 3, **characterized in that** said sending step (E40) is performed by another equipment.

5. The authentication method according to claim 3 or 4, **characterized in that** it includes a preliminary step (E10) of authenticating the user of the terminal with said terminal (TRM).

6. The authentication method according to any one of claims 3 to 5, **characterized in that** said step (E30) of generating said authentication code ($OTP_1$) takes into account additional input data specific to a transaction.

7. The authentication method according to any one of claims 3 to 6, **characterized in that** said authentication code ($OTP_1$) constitutes a one time password with a limited lifetime.

8. The authentication method according to any one of claims 1 to 7 **characterized in that** said authentication code ($OTP_1$) is a code whose length is greater than that of said dynamic security code ($DCCV_1$, $DCCV_2$), for example a 6-digit code.

9. The authentication method according to any one of claims 1 to 8 **characterized in that** said dynamic security code ($DCCV_1$, $DCCV_2$) is a 3 or 4 digit code.

10. An authentication server that can be used to authenticate a terminal (TRM), this server including:

- means (5200) for receiving a request to verify an authentication code ($OTP_1$);
- means (5300) for obtaining, through a secret cryptographic function, a dynamic security code ($DCCV_2$) by using a bank account number associated with said terminal (TRM), a and time data (CTC) obtained by said server (SRV);
- cryptographic means (5700) for obtaining a verification code ($OTP_2$) from said dynamic security code ($DCCV_2$), from a secret (KD) shared between said terminal (TRM) and said server (SRV) and from a time data (ATC) obtained by said server;
- means (5800) for verifying the validity of said authentication code ($OTP_1$) by comparing it with said verification code ($OTP_2$);

the server being further configured to generate or renew said shared secret (KD) from an identifier of said user terminal (TRM) and to send (F10) information (KD, KSL) obtained from this secret to said terminal (TRM).

11. A terminal (TRM) including:

- means (MS) for obtaining a dynamic security code ($DCCV_1$) generated by a smartcard (1000);
- means (MOTP) for generating an authentication code ($OTP_1$) from said dynamic security code ($DCCV_1$), from a secret (KD) shared with said authentication server (SRV) and from a time data (TC) obtained by said terminal,

the terminal also being configured to receive information obtained from a secret to be shared with said authentication server.

12. A terminal according to claim 11, **characterized in that** it includes means (COM) for sending said authentication code ($OTP_1$) to said server (SRV) to authenticate said terminal (TRM) with said server (SRV).

13. A user authentication system including:

- a smartcard (1000) including means for generating a dynamic security code ($DCCV_1$); and
- a terminal according to claim 11 or 12, this terminal including means for obtaining said dynamic security code ($DCCV_1$).

14. The authentication system according to claim 13, **characterized in that** the authentication code ($OTP_1$) is generated (E30) by the terminal (TRM) more frequently than the dynamic security code ($DCCV_1$) is generated by said smartcard.

FIG.1

FIG.2

MS

SCR

MM

APP    MF    MV

CPU   MOTP   COM

TRM

**FIG.3**

| | |
|---|---|
| USER AUTH | E10 |
| GET DCCV$_1$ | E20 |
| OTP$_1$ | E30 |
| AUTH | E40 |

**FIG.4**

| | |
|---|---|
| KD,KSL → TRM | F10 |
| RX OTP$_1$ | F20 |
| DCCV$_2$ | F30 |
| OTP$_2$ | F40 |
| CMP OTP$_1$,OTP$_2$ | F50 |
| TX OK/NOK | F60 |

**FIG.5**

FIG.6

## RÉFÉRENCES CITÉES DANS LA DESCRIPTION

**Documents brevets cités dans la description**

- US 2015195280 A
- US 20140279555 A